# EUROPÄISCHE PATENTSCHRIFT

(11) **EP 3 582 873 B1**
(45) Veröffentlichungstag und Bekanntmachung des Hinweises auf die Patenterteilung: **22.09.2021**
(21) Anmeldenummer: 18721260.0
(22) Anmeldetag: 10.02.2018
(51) Int. Cl.: B01D 45/08

(54) **TROPFENABSCHEIDER MIT GERINGER BAUHÖHE**
DROPLET SEPARATOR HAVING A LOW OVERALL HEIGHT
SÉPARATEUR DE GOUTTES À FAIBLE ENCOMBREMENT EN HAUTEUR

(30) Priorität: 14.02.2017 DE 102017001415
(43) Veröffentlichungstag der Anmeldung: 25.12.2019
(73) Patentinhaber: Munters Euroform GmbH, 52068 Aachen (DE)
(72) Erfinder: GRIEPENTROG, Wieland, 4721 Kelmis (BE); SHAHNAZIAN, Hamid, 45239 Essen (DE); WANDRES, Peter, 52066 Aachen (DE); SCHMITZ, Jürgen, 52070 Aachen (DE); SCHIEREN, Willi, 52072 Aachen (DE)
(74) Vertreter: Hauck Patentanwaltspartnerschaft mbB
(86) Internationale Anmeldenummer: PCT/DE2018/000028
(87) Internationale Veröffentlichungsnummer: WO 2018/149432

(56) Entgegenhaltungen:
- WO-A1-2005/107921
- DE-A1-102005 061 780
- DE-A1-102006 011 152
- DE-U1-202007 001 942

## Beschreibung

Die vorliegende Erfindung betrifft einen Tropfenabscheider für einen vertikalen Strömungskanal, insbesondere einer Rauchgasentschwefelungsanlage, mit einer in Bezug auf den vertikalen Strömungskanal horizontal oder durchgehend einseitig geneigt angeordneten Tropfenabscheiderlage mit einer Vielzahl von parallel zueinander angeordneten Lamellentropfenabscheiderprofilen.

Es sind Tropfenabscheider für einen vertikalen Strömungskanal bekannt, die eine Tropfenabscheiderlage oder mehrere Tropfenabscheiderlagen besitzen, bei denen es sich beispielsweise um einen Grobabscheider und einen nachgeschalteten Feinabscheider handeln kann. Diese Tropfenabscheiderlagen sind dachförmig oder V-förmig ausgebildet und stützen sich seitlich entweder direkt oder über eine entsprechende Stützkonstruktion auf Trägern des Strömungskanals ab. Ein derartiger Tropfenabscheider ist beispielsweise aus der DE 20 2007 001 942 U1 bekannt.

Ferner weisen derartige Tropfenabscheider eine sich von einem Träger bis zum anderen Träger erstreckende Trägerstange auf, die zur Anordnung von Bedüsungsrohren zur Reinigung des Tropfenabscheiders dient. Auch ist es bekannt, die Spitze einer dachförmig ausgebildeten Tropfenabscheiderlage an einer derartigen Trägerstange zu fixieren.

Ferner sind Tropfenabscheider bekannt, die horizontal ausgebildete bzw. angeordnete Tropfenabscheiderlagen besitzen, welche auf diversen Tragbalken gelagert sind, die sich über den Querschnitt eines Strömungskanals erstrecken. Auch ist es aus der DE 20 2011 109 332 U1 bekannt, dachförmig ausgebildete Tropfenabscheiderlagen an solchen Tragbalken aufzuhängen.

Eine derartige Tropfenabscheideranordnung ist ferner beispielsweise aus der WO 2005/107921 A1 bekannt.

Die eingangs erwähnten dachförmig oder V-förmig ausgebildeten Tropfenabscheider haben den Vorteil, dass sie aufgrund ihrer dachförmig oder V-förmig geneigten Tropfenabscheiderlagen, die in der Regel einen relativ großen Anstellwinkel besitzen, eine gute Abführung der abgeschiedenen Flüssigkeit bzw. der Reinigungsflüssigkeit ermöglichen. Diese Flüssigkeit wird bei dachförmig ausgebildeten Tropfenabscheidern von der Spitze des Daches seitlich nach unten entlang den Lamellenprofilen abgeführt. Bei V-förmig ausgebildeten Abscheidern erfolgt die Abführung nach unten in die Mitte. Nachteilig bei derart ausgebildeten Abscheidern ist jedoch die Tatsache, dass sie aufgrund des relativ großen Anstellwinkels der Tropfenabscheiderlagen eine relativ große Bauhöhe besitzen.

Diesen Nachteil weisen horizontal angeordnete Tropfenabscheiderlagen nicht auf, jedoch ist hierbei die Flüssigkeitsabführung problematischer.

Die DE 10 2005 061 780 A1 offenbart einen vertikal durchströmten Tropfenabscheider mit horizontal und parallel zueinander angeordneten Lamellentropfenabscheiderprofilen, die eine gesamte horizontale Tropfenabscheiderlage bilden. Die Lamellenabscheider weisen quer zu den Lamellen laufende Endwände und dazwischen angeordnete, ebenfalls quer verlaufende Zwischenwände auf. Die Abscheidevorrichtung ist seitlich auf Tragbalken gehalten und weist zusätzliche Tragstäbe auf.

In der DE 10 2006 011 152 A1 ist ein Tropfenabscheider offenbart, bei welchem Zwischenwände von V- oder dachförmigen Lamellenabscheiderpaketen an Querstäben befestigt sind. Bei der in dieser Veröffentlichung offenbarten Konstruktion handelt es sich um höher aufbauende, winklig angeordnete Lamellenpakete.

Eine Reduzierung des Anstellwinkels bei den vorstehend beschriebenen dachförmig oder V-förmig ausgebildeten Abscheiderlagen bringt zwar den Vorteil einer geringeren Bauhöhe mit sich, ist jedoch konstruktionsmäßig mit größeren Schwierigkeiten verbunden, da hierdurch hohe Horizontalkräfte entstehen.

Der vorliegenden Erfindung liegt die Aufgabe zugrunde, einen Tropfenabscheider der angegebenen Art zu schaffen, der sich bei einer einfachen Konstruktion durch eine besonders geringe Bauhöhe auszeichnet.

Diese Aufgabe wird erfindungsgemäß gelöst durch einen Tropfenabscheider mit den Merkmalen von Patentanspruch 1.

Die Erfindung wendet sich von der bisherigen dachförmigen oder V-förmigen Konstruktion der Abscheiderlagen ab und schlägt stattdessen eine Abscheiderlage vor, die über die gesamte Spannweite, d.h. von Trägereinrichtung zu Trägereinrichtung des Strömungskanals, horizontal oder durchgehend einseitig geneigt angeordnet ist. Um hierbei den entsprechenden statischen Anforderungen zu genügen, sind Zwischenabstützungen vorgesehen, wobei die entsprechende Tropfenabscheiderlage über ihre Spannweite mindestens eine Zwischenabstützung aufweist. Diese Zwischenabstützung wird von einer Zwischenwand gebildet, die die Lamellentropfenabscheiderprofile der Tropfenabscheiderlage trägt, und von einer Halteplatte, auf die sich die Zwischenwand abstützt bzw. an der die Zwischenwand angehängt ist. Die mindestens eine Halteplatte wiederum ist an einem Tragstab gelagert, der sich oberhalb oder unterhalb der Tropfenabscheiderlage von einer Trägereinrichtung zur anderen Trägereinrichtung erstreckt und das eigentliche Tragelement für die Tropfenabscheiderlage bildet. Befindet sich die Tropfenabscheiderlage oberhalb des Tragstabes, bildet die am Tragstab gelagerte Halteplatte eine entsprechende Abstützung für die mindestens eine Zwischenwand der Abscheiderlage. Ist die Abscheiderlage unterhalb des Tragstabes angeordnet, hängt die Halteplatte am Tragstab und bildet die Aufhängung für die Zwischenwand der Abscheiderlage.

Auch die beiden Endwände der Abscheiderlage werden von entsprechenden Halteplatten getragen bzw. sind an diesen aufgehängt, wobei sich der Tragstab durch die Halteplatten erstrecken kann.

Im einfachsten Fall, in dem eine einzige Tropfenabscheiderlage vorgesehen ist, besitzt diese Lage daher zwei Endwände und mindestens eine Zwischenwand, die die einzelnen Lamellentropfenabscheiderprofile trägt, sowie drei Halteplatten, die den beiden Endwänden und der mindestens einen Zwischenwand zugeordnet sind, und mindesten einen Tragstab, der die abgestützten oder aufgehängte Halteplatten trägt.

Die Lamellentropfenabscheiderprofile erstrecken sich vorzugsweise durch entsprechende Schlitze in der mindestens einen Zwischenwand.

Die mindestens eine Tropfenabscheiderlage kann hierbei horizontal oder durchgehend einseitig geneigt von Endwand zu Endwand angeordnet sein.

Da die mindestens eine Tropfenabscheiderlage über ihre gesamte Spannweite mindestens eine Abstützung aufweist, können relativ große Spannweiten überbrückt werden. Durch die Anordnung von Halteplatten innerhalb des Querschnittes des Strömungskanals wird der Strömungsquerschnitt zwar leicht verengt, jedoch wird diese Verengung erfindungsgemäß in Kauf genommen, da die durch diese Anordnung erzielten Vorteile überwiegen.

Ferner basiert die erfindungsgemäße Lösung auf einem neuartigen Prinzip zur Lastabtragung. Während bei den eingangs erwähnten dachförmigen oder V-förmigen Konstruktionen die dort vorgesehenen Trägerstangen nur die Aufgabe haben, entsprechende Bedüsungsrohre für das Reinigungssystem zu lagern, und die über den freien Querschnittsbereich keine Tragfunktion für die Abscheiderlage haben, nimmt der bei der Erfindung vorgesehene Tragstab sämtliche Lasten der Abscheiderlage auf, die über die entsprechenden Halteplatten in den Tragstab überführt werden. Der Tragstab wird hierdurch auf Biegung beansprucht. Demgegenüber erfolgt bei den dachförmigen oder V-förmigen Konstruktionen die Lastabtragung direkt auf die beiderseits des Strömungskanals angeordneten Trägereinrichtungen.

Eine besonders bevorzugte Ausführungsform des erfindungsgemäß ausgebildeten Tropfenabscheiders zeichnet sich dadurch aus, dass er zweistufig ausgebildet ist und eine oberhalb und eine unterhalb des Tragstabes angeordnete Tropfenabscheiderlage aufweist. Hierbei kann es sich bei der unterhalb des Tragstabes angeordneten Tropfenabscheiderlage um einen Grobabscheider und bei der oberhalb des Tragstabes angeordneten Tropfenabscheiderlage um einen Feinabscheider handeln. Bei dieser zweistufigen Ausführungsform erstrecken sich die Halteplatten von den oberen Randbereichen der Endwände und Zwischenwände der unteren Abscheiderlage bis zu den unteren Randbereichen der Endwände und Zwischenwände der oberen Abscheiderlage und sind mit den Endwänden und Zwischenwänden auf geeignete Weise miteinander verbunden. Der Tragstab erstreckt sich dabei vorzugsweise durch entsprechende Öffnungen in den Halteplatten und bildet daher eine im Wesentlichen zentrale Lagereinrichtung für diese. Durch die obere Abscheiderlage werden daher die Halteplatten auf Druck beansprucht, wobei eine Abstützung auf dem Tragstab erfolgt. Die untere Abscheiderlage beansprucht die Halteplatten auf Zug, wobei der Tragstab das entsprechende Lager bildet.

Die Befestigung der Halteplatten an den jeweiligen Endwänden und Zwischenwänden der Abscheiderlagen kann grundsätzlich auf beliebige Weise erfolgen, beispielsweise durch Verschrauben, Verschweißen, Verlöten, Zusammenstecken. Beispielsweise können bei der zweistufigen Ausführungsform die Halteplatten mit den Wänden der unteren Abscheiderlage verschraubt sein, während sie mit den Wänden der oberen Abscheiderlage über Steckverbindungen verbunden sein können. Solche Verbindungen haben den Vorteil einer einfachen Montage und Demontage.

Die Befestigung der Halteplatten an den End- und Zwischenwänden erfolgt etwa in vertikaler Verlängerung der End- und Zwischenwände. Damit sollen alle Befestigungsarten umfasst sein, die in der Form eines Stumpfstoßes, Überlappungssto-ßes etc. erfolgen. "Etwa vertikal" soll daher auch nicht genau vertikale Anordnungen abdecken.

Um das Tragsystem weiter zu versteifen, sind zwischen den Halteplatten hierzu quer verlaufende und diese verbindende Stegplatten angeordnet. Diese Stegplatten erstrecken sich daher parallel zur Längsrichtung des Tragstabes und sind in geeigneter Weise mit den benachbarten Halteplatten verbunden, beispielsweise ebenfalls über Steckverbindungen, so dass eine einfache und rasche Montage und Demontage möglich ist.

Die Stegplatten sind mit ihrer Unterkante oder ihrer Oberkante am Tragstab gelagert. Bei einem einstufigen System, bei dem sich die Abscheiderlage oberhalb des Tragstabes befindet, sind die Stegplatten daher vorzugsweise auf dem Tragstab angeordnet. Bei einem einstufigen System, bei dem sich die Abscheiderlage unterhalb des Tragstabes befindet, sind die Stegplatten vorzugsweise unterhalb des Tragstabes vorgesehen. Bei zweistufigen Systemen können sowohl oberhalb als auch unterhalb des Tragstabes entsprechende Stegplatten angeordnet sein.

In Weiterbildung der Erfindung weisen die Halteplatten und/oder Stegplatten Verstärkungsstege auf. Auch diese Verstärkungsstege dienen dazu, das Tragsystem zu stabilisieren. Die Verstärkungsstege sind vorzugsweise über Steckverbindungen mit den Halteplatten und/oder Stegplatten verbunden, so dass sie bei einer Demontage des Systems rasch entfernt werden können.

Bei einer weiteren bevorzugten Ausführungsform weisen die Zwischenwände und/oder Endwände nach oben oder nach unten verlängerte Abschnitte zu Lagerungszwecken, insbesondere von Bedüsungsrohren, auf. Diese Abschnitte können daher beispielsweise entsprechende Ausnehmungen besitzen, in denen Bedüsungsrohre oder andere Lagerelemente angeordnet sind.

Auch die Halteplatten und/oder Stegplatten können Öffnungen zur Durchführung von Bedüsungsrohren oder Lagerelementen etc. besitzen.

Die an den Endwänden angeordneten Halteplatten besitzen vorzugsweise sich nach außen erstreckende Flansche zur Auflage des Tragstabes. Diese Flansche können als Winkelflansche ausgebildet sein und somit eine sich parallel zur Halteplatte erstreckende Endwand besitzen. Entsprechende Abstützungen dieser Endwand können vorgesehen sein.

Wie bereits erwähnt, können die Teile des Tragsystems über Steckverbindungen miteinander verbunden sein. Speziell können daher die Halteplatten mit den Zwischenwänden, Endwänden, Stegplatten und/oder mit Verstärkungsstegen über Steckverbindungen fixiert sein. Diese Steckverbindungen haben den großen Vorteil, dass eine rasche und einfache Montage und Demontage des Tragsystems möglich ist, um beispielsweise Wartungsarbeiten an den Abscheiderlagen durchführen zu können.

Wie bereits erwähnt, kann die vorgesehene Tropfenabscheiderlage horizontal oder unter einem Neigungswinkel bzw. Anstellwinkel angeordnet sein, der vorzugsweise gering ist, um eine geringe Bauhöhe des Gesamtsystems zu erreichen. Ein geringer Neigungswinkel gegenüber einer horizontalen Lage ist von Vorteil, da hierdurch die Flüssigkeit gut abgeführt werden kann. Vorzugsweise kommt ein Neigungswinkel zwischen > 0° und ≤ 20° zur Anwendung. Es versteht sich, dass bei mehreren Tropfenabscheiderlagen die Lagen unterschiedliche Neigungswinkel aufweisen können. Beispielsweise kann eine horizontal angeordnete Lage mit einer Lage mit einem Neigungswinkel zwischen 0° und 20° kombiniert werden, wobei ein Neigungswinkel von 15° eine bevorzugte Ausführungsform darstellt.

Der erfindungsgemäß ausgebildete Tropfenabscheider weist vorzugsweise parallel zu den Halteplatten verlaufende Zuführrohre für eine Reinigungsflüssigkeit auf, von denen Bedüsungsrohre parallel zu den Lamellentropfenabscheiderprofilen abzweigen. Diese Zuführrohre erstrecken sich vorzugsweise durch Öffnungen in den Stegplatten und werden von diesen gelagert. Bei einer speziellen Ausführungsform sind zwei Zuführrohre innerhalb des Raumes zwischen den äußeren Halteplatten angeordnet. Derartige Zuführrohre können aber auch außerhalb der äußeren Halteplatten angeordnet sein, beispielsweise dort auf entsprechenden Flanschen gelagert sein.

Von den Zuführrohren zweigen Bedüsungsrohre parallel zu den Lamellentropfenabscheiderprofilen ab. Mit diesen Bedüsungsrohren erfolgt in bekannter Weise eine Reinigung der entsprechenden Tropfenabscheiderlagen von unten/oder von oben.

Eine spezielle Ausführungsform zeichnet sich dadurch aus, dass der Tropfenabscheider mindestens ein Zuführrohr aufweist, das unterhalb der untersten Tropfenabscheiderlage angeordnet ist und von einer sich von der untersten Tropfenabscheiderlage nach unten erstreckenden Halterung getragen wird. Diese Halterung erstreckt sich dabei vorzugsweise parallel zu den Lamellentropfenabscheiderprofilen und besitzt eine Öffnung, die das rechtwinklig hierzu verlaufende Zuführrohr aufnimmt. Auch von diesem Zuführrohr zweigen ein oder mehrere Bedüsungsrohre ab, die sich parallel zu den Lamellentropfenabscheiderprofilen erstrecken. Diese Bedüsungsrohre können durch weitere Halterungen an der jeweiligen Tropfenabscheiderlage fixiert sein.

Bei noch einer anderen Ausführungsform ist der Tragstab mit seinen beiden Endabschnitten in kastenförmigen Ansätzen auf den Außenseiten der äußeren Halteplatten angeordnet, wobei diese kastenförmigen Ansätze den Tropfenabscheider im installierten Zustand auf entsprechenden Trägereinrichtungen eines Strömungskanales, insbesondere einer Rauchgasentschwefelungsanlage, lagern.

Sämtliche Teile der hier beschriebenen Tropfenabscheiderkonstruktion, abgesehen vom Tragstab, bestehen vorzugsweise aus einem geeigneten Kunststoff. Der Tragstab kann beispielsweise ein kunststoffummantelter Stahlträger sein.

Die Erfindung wird nachfolgend anhand eines Ausführungsbeispieles in Verbindung mit der Zeichnung im Einzelnen erläutert. Es zeigen:
- Figur 1: eine schematische räumliche Ansicht eines zweistufigen Tropfenabscheiders;
- Figur 2: die Tragkonstruktion für den Tropfenabschei-der der Figur 1, aufgelöst in Einzelteile;
- Figur 3: den Tropfenabscheider der Figuren 1 und 2 im auseinandergezogenen Zustand;
- Figur 4: eine räumliche Ansicht des zweistufigen Tropfenabscheiders mit entsprechenden Bedüsungsrohren; und
- Figur 5: eine räumliche Ansicht einer weiteren Ausführungsform eines zweistufigen Tropfenabscheiders mit entsprechenden Bedüsungsrohren.

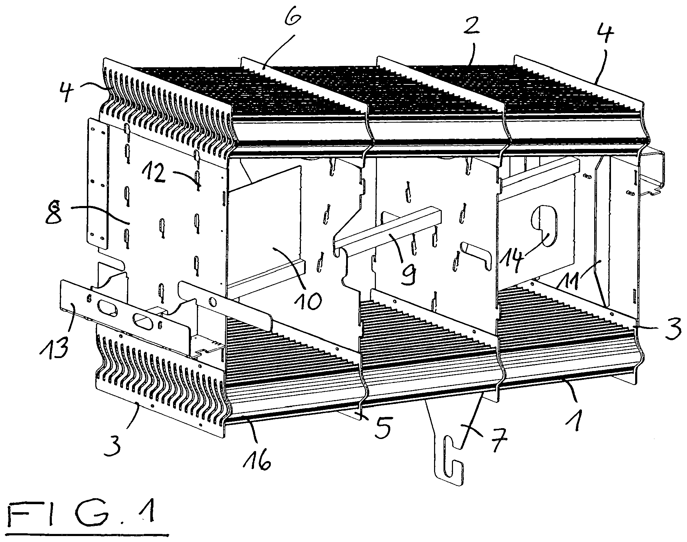

Der in den Figuren 1-4 dargestellte Tropfenabscheider ist zweistufig ausgebildet und für den Einbau in einen vertikalen Strömungskanal einer Rauchgasentschwefelungsanlage ausgebildet. Der Tropfenabscheider besitzt eine untere Tropfenabscheiderlage 1 und eine obere Tropfenabscheiderlage 2, die als Grobabscheider und Feinabscheider ausgebildet sind und jeweils aus einer Vielzahl von nebeneinander angeordneten Lamellenprofilen bestehen. Diese Lamellenprofile sind bekannt und müssen daher im Einzelnen nicht beschrieben werden. Die einzelnen Lamellenprofile 16 sind mit Endwänden 3, 4, die sich quer zu den Lamellenprofilen 16 erstrecken, verschweißt und erstrecken sich durch die Schlitze von zwei Zwischenwänden 5, 6.

Bei der hier dargestellten Ausführungsform ist die untere Tropfenabscheiderlage 1 mit einem Neigungswinkel von 10° angeordnet, während die obere Tropfenabscheiderlage 2 einen Neigungswinkel von 15° zur Horizontalen besitzt.

Für die Lagerung des Tropfenabscheiders an Trägereinrichtungen des Strömungskanals, beispielsweise an dessen Seitenwänden, findet eine spezielle Tragkonstruktion Verwendung. Hauptelement dieser Tragkonstruktion ist ein Tragstab 9, der die entsprechenden Last der oberen und unteren Tropfenabscheiderlage 1, 2 auf die seitlichen Trägereinrichtungen des Strömungskanals abträgt. Dieser Tragstab 9 erstreckt sich durch insgesamt vier Halteplatten 8, die sich quer zum Tragstab 9 erstrecken und in vertikaler Verlängerung der Endwände 3, 4 und Zwischenwände 5, 6 der Abscheiderlagen 1, 2 angeordnet sind. Die Halteplatten 8 besitzen jeweils eine etwa zentrale Öffnung, durch die sich der Tragstab 9 erstreckt, so dass sich die obere Tropfenabscheiderlage 2 über den oberen Bereich der Halteplatten 8 auf dem Tragstab 9 abstützen kann, während die andere Tropfenabscheiderlage 1 über den unteren Bereich der Halteplatten 8 am Tragstab 9 aufgehängt ist. Die Endwände 3 und Zwischenwände 5 der unteren Tropfenabscheiderlage 1 sind in ihrem oberen Randbereich mit den Halteplatten 8 verschraubt. Die Endwände 4 und Zwischenwände 6 der oberen Tropfenabscheiderlage 2 sind mit ihren unteren Randbereichen über geeignete Steckverbindungen mit den Halteplatten 8 verbunden.

Zur Versteifung dieser Tragkonstruktion sind Stegplatten 10 über und unter dem Tragstab 9 angeordnet, die sich jeweils zwischen zwei Halteplatten erstrecken und diese miteinander verbinden. Auch dies kann mittels geeigneter Steckverbindungen erfolgen. Des Weiteren weisen die Halteplatten 8 Versteifungsstege 11 auf, die durch Steckverbindungen an den Halteplatten befestigt sind.

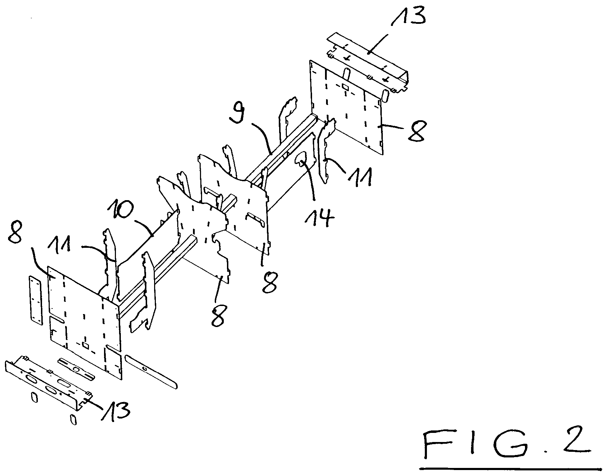

Der entsprechende Aufbau dieser Tragkonstruktion ist des Weiteren in Figur 2 mit Einzeldarstellung der jeweiligen Elemente gezeigt.

Der Tragstab 9, der sich durch die vier Halteplatten erstreckt, liegt an seinen Enden auf einem Flansch 13 der Halteplatten 8 auf, der sich nach außen erstreckt und auf der Trägereinrichtung des Strömungskanals zu liegen kommt.

In Figur 1 ist gezeigt, dass eine Zwischenwand 5 einen sich nach unten erstreckenden Abschnitt 7 aufweist, der mit einer geeigneten Ausnehmung zur Aufnahme eines Bedüsungsrohres zur Reinigung des Abscheiders versehen ist. Derartige Bedüsungsrohre können sich auch durch geeignete Löcher der Stegplatten 10 erstrecken, wie beispielsweise bei 14 gezeigt.

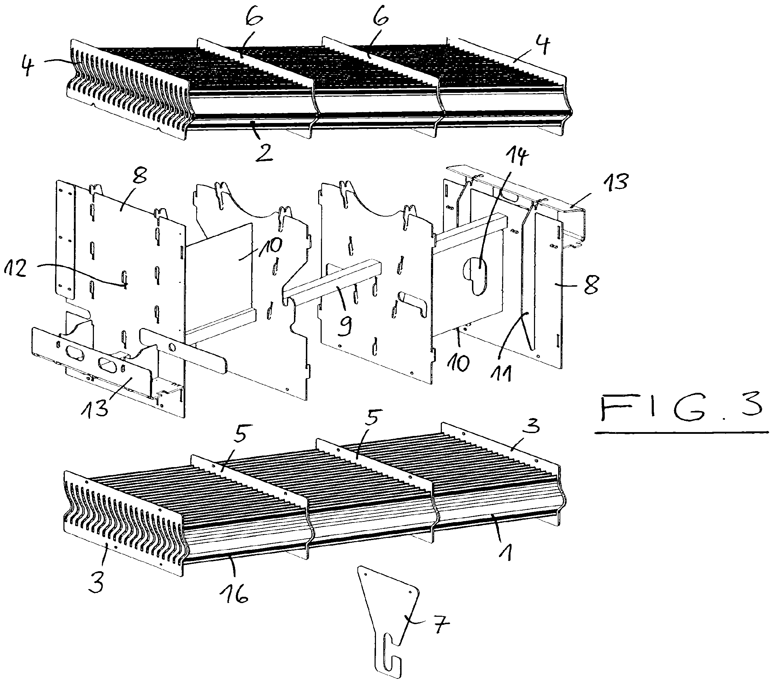

Figur 3 zeigt den Abscheider der Figuren 1 und 2 im auseinandergezogenen Zustand der beiden Abscheiderlagen 1, 2 und der dazwischen angeordneten Tragkonstruktion. Lediglich die Endwände 3 und Zwischenwände 5 der unteren Abscheiderlage 1 sind mit den Halteplatten 8 der Tragkonstruktion verschraubt, während es sich bei allen anderen Verbindungen um Steckverbindungen handelt. Bei diesen Steckverbindungen besitzt das eine Element einen Haken, der durch eine Öffnung im anderen Element geführt ist. Beispielsweise besitzt die Stegplatte 10 stirnseitig einen solchen Haken 12, der durch einen Schlitz in der zugehörigen Halteplatte 8 geführt ist.

Durch Abwärtsbewegung der Stegplatte 10 wird dann eine Verrastung der beiden Elemente miteinander erzielt. Bei der Demontage wird die Stegplatte 10 angehoben, wonach der Haken 12 aus der Schlitzöffnung entfernt werden kann.

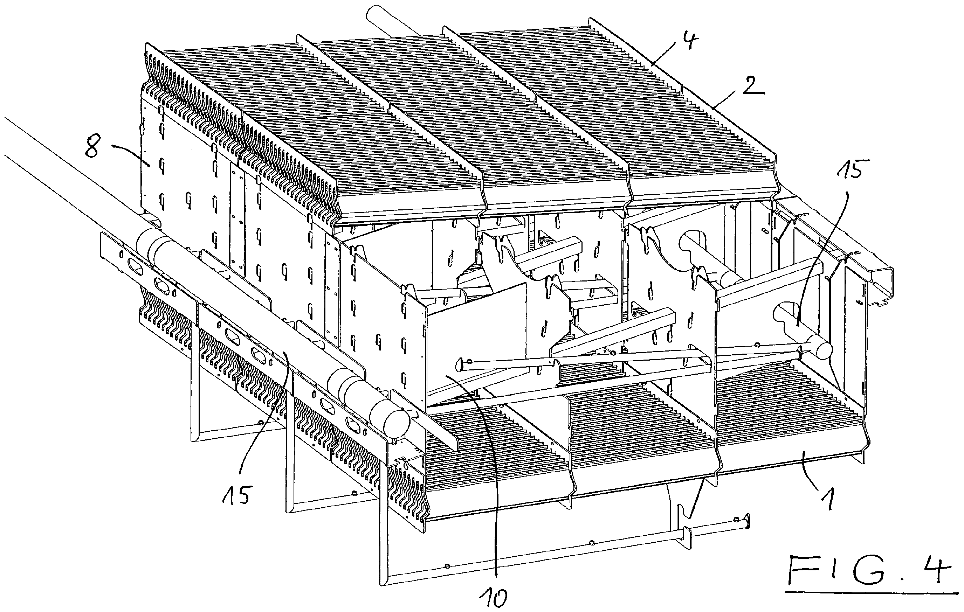

Figur 4 zeigt eine Gesamtansicht des zweistufigen Abscheiders mit Tragkonstruktion, wobei hier einige Bedüsungsrohre 15 im Detail dargestellt sind.

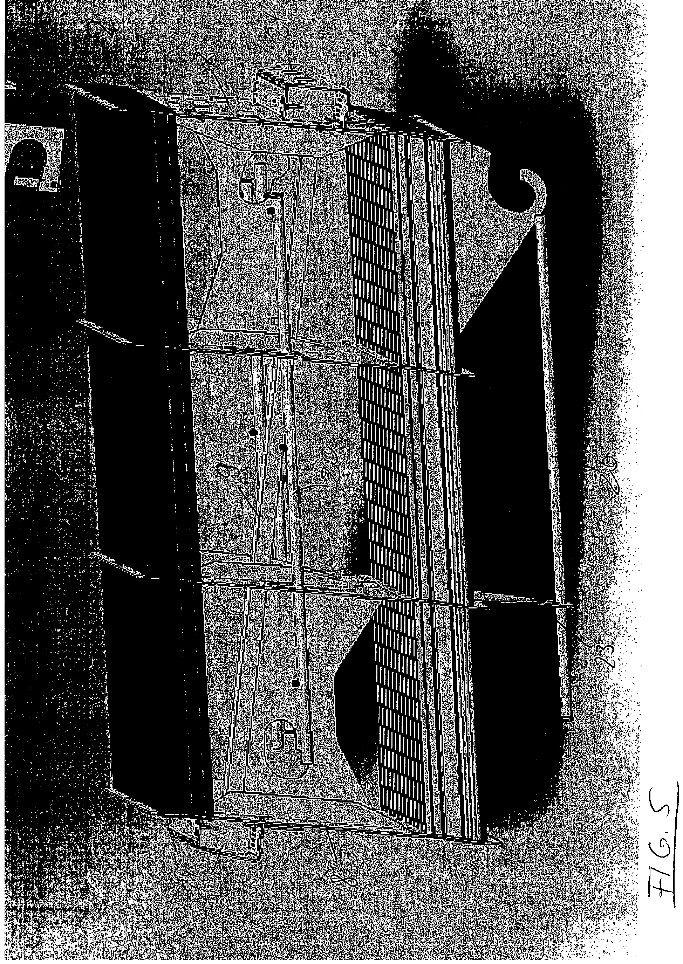

Figur 5 zeigt eine weitere Ausführungsform eines zweistufigen Tropfenabscheiders. Diese unterscheidet sich von der Ausführungsform der Figur 4 im Wesentlichen nur durch die Ausbildung des Bedüsungssystems. Während bei der Ausführungsform der Figur 4 ein Zuführrohr 15 für die Reinigungsflüssigkeit für das Bedüsungssystem auf der Außenseite der in der Figur linken Halteplatte 8 angeordnet ist, sind bei der Ausführungsform der Figur 5 zwei Zuführrohre 15 (nicht gezeigt)innerhalb des Raumes zwischen den äußeren Halteplatten 8 vorgesehen. Auch hierbei erstrecken sich die Zuführrohre 15 parallel zu den Halteplatten 8 durch entsprechende Öffnungen 14 in den Stegplatten 10. In diesem Fall ist ebenfalls eine Stegplatte 10 unterhalb des Tragstabes 9 und eine Stegplatte 10 oberhalb des Tragstabes angeordnet. In der Mitte, d.h. zwischen den beiden mittleren Halteplatten 8 befindet sich keine Stegplatte.

Von den beiden Zuführrohren 15 zweigen rechtwinklig drei Bedüsungsrohre 20 ab, die parallel zu den Lamellentropfenabscheiderprofilen 16 verlaufen. Bei der hier dargestellten Ausführungsform beaufschlagen die Bedüsungsrohre 20 die obere und untere Tropfenabscheiderlage 2, 1 mit einer entsprechenden Reinigungsflüssigkeit, die über die Zuführrohre 15 zugeführt wird.

Ein weiterer Unterschied gegenüber der Ausführungsform der Figur 4 besteht darin, dass der Tropfenabscheider ein weiteres Zuführrohr 15 (ebenfalls nicht gezeigt) aufweist, das unterhalb der unteren Tropfenabscheiderlage 1 angeordnet ist. Dieses Zuführrohr 15 wird von einer sich von der unteren Tropfenabscheiderlage 1 nach unten erstreckenden Halterung 22 getragen. Diese Halterung 22 ist bei diesem Ausführungsbeispiel als dreieckiges plattenförmiges Element ausgebildet, das eine Öffnung 21 zur Aufnahme des Zuführrohres 15 aufweist. Von diesem Zuführrohr 15 zweigt ein Bedüsungsrohr 20 rechtwinklig ab, mit dem die Unterseite der unteren Tropfenabscheiderlage 1 besprüht wird. Dieses Bedüsungsrohr 20 wird von einer weiteren sich nach unten erstreckenden Halterung 23 getragen.

Ein weiteres Merkmal, mit dem sich die Ausführungsform der Figur 5 von der der Figur 4 unterscheidet, besteht darin, dass der Tragstab 9 mit seinen beidseitigen Endabschnitten in kastenförmigen Ansätzen 24 gelagert ist, die auf den Außenseiten der äußeren Halteplatten 8 angeordnet sind. Mit diesen kastenförmigen Ansätzen 24 ist der Tropfenabscheider im installierten Zustand auf entsprechenden Trägereinrichtungen eines Strömungskanals insbesondere einer Rauchgasentschwefelungsanlage gelagert.

## Patentansprüche

1. Tropfenabscheider für einen vertikalen Strömungskanal, insbesondere einer Rauchgasentschwefelungsanlage, mit einer in Bezug auf den vertikalen Strömungskanal horizontal oder durchgehend einseitig geneigt angeordneten Tropfenabscheiderlage (1, 2) mit einer Vielzahl von parallel zueinander angeordneten Lamellentropfenabscheiderprofilen (16), die mit hierzu quer verlaufenden Endwänden (3, 4) und mindestens einer hierzu quer verlaufenden Zwischenwand (5, 6) versehen sind,
einem oberhalb oder unterhalb der Tropfenabscheiderlage (1, 2) angeordneten Tragstab (9), der zur endseitigen Lagerung auf beidseitigen Trägereinrichtungen des vertikalen Strömungskanals ausgebildet ist, und
etwa in vertikaler Verlängerung der End- und Zwischenwände (3, 4, 5, 6) an diesen angeordneten Halteplatten (8), durch die sich der Tragstab (9) erstreckt und die sich auf diesem abstützen oder an diesem angehängt sind,
wobei zwischen den Halteplatten (8) hierzu quer verlaufende und diese verbindende Stegplatten (10) angeordnet sind, die mit ihrer Unterkante oder ihrer Oberkante am Tragstab (9) gelagert sind, und
wobei die Halteplatten (8) und/oder Stegplatten (10) Öffnungen (14) zur Durchführung von Bedüsungsrohren besitzen.

2. Tropfenabscheider nach Anspruch 1, **dadurch gekennzeichnet, dass** er zweistufig ausgebildet ist und eine oberhalb und eine unterhalb des Tragstabes (9) angeordnete Tropfenabscheiderlage (1, 2) aufweist.

3. Tropfenabscheider nach Anspruch 1 oder 2, **dadurch gekennzeichnet, dass** die Halteplatten (8) mit den Endwänden (3) und Zwischenwänden (5) verschraubt sind.

4. Tropfenabscheider nach einem der vorangehenden Ansprüche, **dadurch gekennzeichnet, dass** die Halteplatten (8) und/oder Stegplatten (10) Verstärkungsstege (11) aufweisen.

5. Tropfenabscheider nach einem der vorangehenden Ansprüche, **dadurch gekennzeichnet, dass** die Zwischenwände (5) und/oder Endwände (3) nach oben oder nach unten verlängerte Abschnitte (7) zu Lagerungszwecken, insbesondere von Bedüsungsrohren, aufweisen.

6. Tropfenabscheider nach einem der vorangehenden Ansprüche, **dadurch gekennzeichnet, dass** die an den Endwänden (3, 4) angeordneten Halteplatten (8) sich nach außen erstreckende Flansche (13) zur Auflage des Tragstabes (9) besitzen.

7. Tropfenabscheider nach einem der Ansprüche 4 bis 6, **dadurch gekennzeichnet, dass** die Halteplatten (8) mit den Zwischenwänden (5, 6), Endwänden (3, 4), Stegplatten (10) und/oder Verstärkungsstegen (11) über Steckverbindungen miteinander verbunden sind.

8. Tropfenabscheider nach einem der Ansprüche 2 bis 7, **dadurch gekennzeichnet, dass** die beiden Tropfenabscheiderlagen (1, 2) unterschiedliche Neigungen besitzen.

9. Tropfenabscheider nach einem der vorangehenden Ansprüche, **dadurch gekennzeichnet, dass** die Tropfenabscheiderlage (1, 2) einen Neigungswinkel > 0° und ≤ 20° aufweist.

10. Tropfenabscheider nach einem der vorangehenden Ansprüche, **dadurch gekennzeichnet, dass** sich die Lamellentropfenabscheiderprofile durch Schlitze in der mindestens einen Zwischenwand (5, 6) erstrecken.

11. Tropfenabscheider nach einem der vorangehenden Ansprüche, **dadurch gekennzeichnet, dass** er parallel zu den Halteplatten (8) verlaufende Zuführrohre (15) für eine Reinigungsflüssigkeit aufweist, von denen Bedüsungsrohre (20) parallel zu den Lamellentropfenabscheiderprofilen (16) abzweigen.

12. Tropfenabscheider nach Anspruch 11, **dadurch gekennzeichnet, dass** zwei Zuführrohre (15) innerhalb des Raumes zwischen den äußeren Halteplatten (8) angeordnet sind.

13. Tropfenabscheider nach Anspruch 11, **dadurch gekennzeichnet, dass** er mindestens ein Zuführrohr (21) aufweist, das unterhalb der untersten Tropfenabscheiderlage (1) angeordnet ist und von einer sich von der untersten Tropfenabscheiderlage (1) nach unten erstreckenden Halterung (22) getragen wird.

14. Tropfenabscheider nach einem der vorangehenden Ansprüche, **dadurch gekennzeichnet, dass** der Tragstab (9) mit seinen beiden Endabschnitten in kastenförmigen Ansätzen (24) auf den Außenseiten der äußeren Halteplatten (8) angeordnet ist, die zur Lagerung des Tropfenabscheiders dienen.

## Claims

1. A droplet separator for a vertical flow channel, in particular of a flue gas desulphurization system, comprising a droplet separator layer (1, 2), which is arranged horizontally relative to the vertical flow channel or continuously inclined on one side, with a plurality of plate droplet separator profiles (16) which are arranged parallel to one another and which are provided with end walls (3, 4) running transversely thereto and at least one intermediate wall (5, 6) running transversely thereto,
a supporting bar (9) which is arranged above or below the droplet separator layer (1, 2) and which is configured so as to be mounted on the end side on carrier apparatuses on either side of the vertical flow channel, and,
approximately in the vertical extension of the end walls and the intermediate walls (3, 4, 5, 6), retaining plates (8) which are arranged thereon, the supporting bar (9) extending through said retaining plates which are supported thereon or suspended thereon,
wherein web plates (10) which are mounted with their lower edge or their upper edge on the supporting bar (9) are arranged between the retaining plates (8), said web plates running transversely thereto and connecting said retaining plates, and
wherein the retaining plates (8) and/or web plates (10) have openings (14) for passing through spray pipes.

2. The droplet separator according to claim 1, **characterized in that** it is configured in two stages and has one droplet separator layer (1, 2) arranged above the supporting bar (9) and one droplet separator layer arranged therebelow.

3. The droplet separator according to claim 1 or 2, **characterized in that** the retaining plates (8) are screwed to the end walls (3) and intermediate walls (5).

4. The droplet separator according to one of the preceding claims, **characterized in that** the retaining plates (8) and/or web plates (10) have reinforcing webs (11).

5. The droplet separator according to one of the preceding claims, **characterized in that** the intermediate walls (5) and/or end walls (3) have portions (7) which are extended upwardly or downwardly for mounting purposes, in particular of spray pipes.

6. The droplet separator according to one of the preceding claims, **characterized in that** the retaining plates (8) which are arranged on the end walls (3, 4) have outwardly extending flanges (13) for bearing the supporting bar (9).

7. The droplet separator according to one of claims 4 to 6, **characterized in that** the retaining plates (8) together with the intermediate walls (5, 6), end walls (3, 4), web plates (10) and/or reinforcing webs (11) are connected to one another via plug connections.

8. The droplet separator according to one of claims 2 to 7, **characterized in that** the two droplet separator layers (1, 2) have different inclinations.

9. The droplet separator according to one of the preceding claims, **characterized in that** the droplet separator layer (1, 2) has an angle of inclination > 0° and ≤ 20°.

10. The droplet separator according to one of the preceding claims, **characterized in that** the plate droplet separator profiles extend through slots in the at least one intermediate wall (5, 6).

11. The droplet separator according to one of the preceding claims, **characterized in that** it has supply pipes (15) for a cleaning liquid which run parallel to the retaining plates (8), spray pipes (20) branching off from said supply pipes parallel to the plate droplet separator profiles (16).

12. The droplet separator according to claim 11, **characterized in that** two supply pipes (15) are arranged inside the space between the outer retaining plates (8).

13. The droplet separator according to claim 11, **characterized in that** it has at least one supply pipe (21) which is arranged below the lowermost droplet separator layer (1) and is carried by a holder (22) extending downwardly from the lowermost droplet separator layer (1).

14. The droplet separator according to one of the preceding claims, **characterized in that** the supporting bar (9) is arranged with its two end portions in box-shaped attachments (24) on the outer faces of the outer retaining plates (8) which serve for mounting the droplet separator.

## Revendications

1. Séparateur de gouttes pour un canal d'écoulement vertical, en particulier d'une installation de désulfurisation des gaz de fumée, avec une couche de séparateur de gouttes (1, 2) disposée horizontalement par rapport au canal d'écoulement vertical ou de façon inclinée en continu vers un côté, avec une pluralité de profilés de séparateur de gouttes à lamelles (16) disposés parallèlement les uns aux autres, lesquels sont pourvus de parois terminales (3, 4) s'étendant transversalement à ceux-ci et au moins une paroi intermédiaire (5, 6) s'étendant transversalement à ceux-ci,
- une barre de support (9) disposée au-dessus ou en dessous de la couche de séparateur de gouttes (1, 2), laquelle est formée sur des dispositifs de support bilatéraux du canal d'écoulement vertical pour le montage côté extrémité, et
- des plaques de maintien (8) disposées sur les parois terminales et intermédiaires (3, 4, 5, 6), approximativement dans le prolongement vertical de celles-ci, à travers lesquelles s'étend la barre de support (9) et lesquelles s'appuient sur celle-ci ou sont accrochées à celle-ci,
dans lequel des plaques de traverse (10) s'étendant transversalement aux plaques de maintien (8) sont disposées entre celles-ci tout en les reliant et sont montées sur la barre de support (9) avec leur bord inférieur ou leur bord supérieur, et
dans lequel les plaques de maintien (8) et/ou les plaques de traverse (10) possèdent des ouvertures (14) pour le passage de tuyaux de pulvérisation.

2. Séparateur de gouttes selon la revendication 1, **caractérisé en ce qu'**il est conçu avec deux étages et présente des couches de séparateur de gouttes (1, 2) disposées au-dessus et en dessous de la barre de support (9).

3. Séparateur de gouttes selon la revendication 1 ou 2, **caractérisé en ce que** les plaques de maintien (8) sont vissées avec les parois terminales (3) et les parois intermédiaires (5).

4. Séparateur de gouttes selon l'une des revendications précédentes, **caractérisé en ce que** les plaques de maintien (8) et/ou les plaques de traverse (10) présentent des traverses de renforcement (11).

5. Séparateur de gouttes selon l'une des revendications précédentes, **caractérisé en ce que** les parois intermédiaires (5) et/ou les parois terminales (3) présentent des sections (7) prolongées vers le haut ou vers le bas et destinées au montage, en particulier de tuyaux de pulvérisation.

6. Séparateur de gouttes selon l'une des revendications précédentes, **caractérisé en ce que** les plaques de maintien (8) disposées sur les parois terminales (3, 4) possèdent des brides (13) s'étendant vers l'extérieur pour l'appui de la barre de support (9).

7. Séparateur de gouttes selon l'une des revendications 4 à 6, **caractérisé en ce que** les plaques de maintien (8) sont reliées l'une à l'autre aux parois intermédiaires (5, 6), aux parois terminales (3, 4), aux plaques de traverse (10) et/ou aux traverses de renforcement (11) par des raccords enfichables.

8. Séparateur de gouttes selon l'une des revendications 2 à 7, **caractérisé en ce que** les deux couches de séparateur de gouttes (1, 2) présentent des inclinaisons différentes.

9. Séparateur de gouttes selon l'une des revendications précédentes, **caractérisé en ce que** la couche de séparateur de gouttes (1, 2) présente un angle d'inclinaison > 0° et ≤ 20°.

10. Séparateur de gouttes selon l'une des revendications précédentes, **caractérisé en ce que** les profilés de séparateur de gouttes à lamelles s'étendent à travers des fentes dans l'au moins une paroi intermédiaire (5, 6).

11. Séparateur de gouttes selon l'une des revendications précédentes, **caractérisé en ce qu'**il présente des tuyaux d'alimentation (15) s'étendant parallèlement aux plaques de maintien (8) pour un liquide de nettoyage, à partir desquels des tuyaux de pulvérisation (20) bifurquent parallèlement aux profilés de séparateur de gouttes à lamelles (16).

12. Séparateur de gouttes selon la revendication 11, **caractérisé en ce que** deux tuyaux d'alimentation (15) sont disposés dans l'espace entre les plaques de maintien extérieures (8).

13. Séparateur de gouttes selon la revendication 11, **caractérisé en ce qu'**il présente au moins un tuyau d'alimentation (21) disposé sous la couche de séparateur de gouttes la plus inférieure (1) et porté par une monture (22) s'étendant vers le bas à partir de la couche de séparateur de gouttes la plus inférieure (1).

14. Séparateur de gouttes selon l'une des revendications précédentes, **caractérisé en ce que** la barre de support (9) est disposée avec ses deux sections d'extrémité dans des embouts en forme de boîtiers (24) sur les côtés extérieurs des plaques de maintien extérieures (8), lesquels servent au montage du séparateur de gouttes.
